# EUROPÄISCHE PATENTSCHRIFT

(11) **EP 3 630 786 B1**
(45) Veröffentlichungstag und Bekanntmachung des Hinweises auf die Patenterteilung: **08.09.2021**
(21) Anmeldenummer: 18729073.9
(22) Anmeldetag: 29.05.2018
(51) Int. Cl.: C07F 9/535, C07F 9/6503, C07F 9/80, C07F 9/90, C07F 9/22, C09K 11/02, C09K 11/62, C09K 11/70, C09K 11/56

(54) **SYNTHESE VON AMINOPNICTOGENEN**
SYNTHESIS OF AMINOPNICTOGENS
SYNTHÈSE D'AMINOPNICTOGÈNES

(30) Priorität: 01.06.2017 DE 102017209324
(43) Veröffentlichungstag der Anmeldung: 08.04.2020
(73) Patentinhaber: Technische Universität Dresden, 01069 Dresden (DE)
(72) Erfinder: WEIGAND, Jan, 01277 Dresden (DE); PANZER, Rene, 41751 Viersen (DE); EYCHMÜLLER, Alexander, 01187 Dresden (DE); GUHRENZ, Chris, 01067 Dresden (DE)
(74) Vertreter: Maiwald Patent- und Rechtsanwaltsgesellschaft mbH
(86) Internationale Anmeldenummer: PCT/EP2018/064017
(87) Internationale Veröffentlichungsnummer: WO 2018/219917

(56) Entgegenhaltungen:
- R Panzer: "Tri(pyrazolyl)phosphane based SynPhos Reagents for Transformation Reactions", Dissertation, 1. Januar 2017 (2017-01-01), Seiten 1-1, XP055499488, TU Dresden Gefunden im Internet: URL:https://forschungsinfo.tu-dresden.de/d etail/abschlussarbeit/41105 [gefunden am 2018-08-14] -& R PANZER: "Tri(pyrazolyl)phosphane based SynPhos Reagents for Transformation Reactions", DISSERTATION, 1. Januar 2017 (2017-01-01), Seiten 1-85, XP055503619,
- R Panzer: "Tri(pyrazolyl)phosphane - Synthese und Koordinationschemie mit ECl3 (E = B, Al, Ga)", 12. Mitteldeutsches Anorganiker- Nachwuchssymposium, 1. September 2014 (2014-09-01), Seiten 1-1, XP055499490, Freiberg Gefunden im Internet: URL:https://forschungsinfo.tu-dresden.de/d etail/vortrag/31136 [gefunden am 2018-08-14]
- R Panzer: "Tri(pyrazolyl)phosphanes - synthesis and coordination chemistry with group 13 and 15 elements", ICPC 2014, 1. Juli 2014 (2014-07-01), Seiten 1-1, XP055499493, Dublin Gefunden im Internet: URL:https://forschungsinfo.tu-dresden.de/d etail/vortrag/31135 [gefunden am 2018-08-14]
- AUDE BUFFARD ET AL: "Mechanistic Insight and Optimization of InP Nanocrystals Synthesized with Aminophosphines", CHEMISTRY OF MATERIALS, Bd. 28, Nr. 16, 2. August 2016 (2016-08-02), Seiten 5925-5934, XP055497794, ISSN: 0897-4756, DOI: 10.1021/acs.chemmater.6b02456
- MICKAEL D. TESSIER ET AL: "Aminophosphines: A Double Role in the Synthesis of Colloidal Indium Phosphide Quantum Dots", JOURNAL OF THE AMERICAN CHEMICAL SOCIETY, Bd. 138, Nr. 18, 3. Mai 2016 (2016-05-03), Seiten 5923-5929, XP055497797, US ISSN: 0002-7863, DOI: 10.1021/jacs.6b01254
- O I Kolodyazhnyi ET AL: "Diad Phosphorus!Nitrogen Prototropism of Tris(alkylamino)phosphines", Russian Journal of General Chemistry, 1 January 2001 (2001-01-01), pages 646-647, XP055732161, Retrieved from the Internet: URL:https://link.springer.com/article/10.1 023%2FA%3A1012364125286
- BURFORD NEIL ET AL: "Sequential dehydrochloride coupling of trichlorophosphine with 2,6-di-isopropylaniline: aminophosphine precursors to phosphetidines", CANADIAN JOURNAL OF CHEMISTRY, NRC RESEARCH PRESS, CA, vol. 80, no. 11, 7 October 2002 (2002-10-07), pages 1404-1409, XP002464833, ISSN: 0008-4042, DOI: 10.1139/V02-161
- KONSTANTIN HERMANN: AKZESSION BESCHEINIGUNG, 5 December 2018 (2018-12-05), page 1,
- Panzer R: "Poster 15 - Tri(pyrazolyl)phosphane - Synthese und Koordinationschemie mit ECl3 (E = B, Al, Ga)", 2. Mitteldeutsches Anorganiker- Nachwuchssymposium, 1 January 2014 (2014-01-01), pages 1-4, XP055772640,
- Panzer R: "Tri(pyrazolyl)phosphanes - synthesis and coordination chemistry with group 13 and 15 elements", ICPC 2014, 1 January 2014 (2014-01-01), pages 1-17, XP055772642,

## Beschreibung

Die vorliegende Anmeldung betrifft ein Verfahren zur Synthese von Aminopnictogenen und deren Verwendung, beispielsweise zur Synthese von Quantenpunkten.

Quantenpunkte werden für eine Vielzahl von Anwendungen eingesetzt, beispielsweise LEDs und Displays (insbesondere Hintergrundbeleuchtung), aber auch als Farbstoff für Marker in der Durchflusszytometrie etc. Hier fanden und finden cadmium- und bleibasierte Quantenpunkte (insbesondere CdSe) Anwendung, welche jedoch durch weniger toxische Verbindungen, z.B. InP-basierte Quantenpunkte, ersetzt werden sollen.

Die Auswahl an Pnictogenprecursoren, beispielsweise Phosphorprecursoren, welche zu Quantenpunkten mit der gewünschten Photolumineszenz, Quantenausbeute und Halbwertsbreite (engl. full width at half maximum, FWHM) führen, ist jedoch beschränkt.

Zudem werden für Prozesse auf industriellem Maßstab günstige, umweltfreundliche und möglichst nicht gesundheitsschädliche Stoffe benötigt.

Als Phosphorprecursor werden heutzutage häufig (Me₃Si)₃P und P(NMe₂)₃)/(P(NEt₂)₃ eingesetzt. Ersteres verlangt jedoch besondere Vorsichtsmaßnahmen während der Lagerung und der Verwendung. Bei P(NMe₂)₃)/(P(NEt₂)₃ wird während der Umsetzung HNMe₂ (Siedepunkt 7 °C) bzw. HNEt₂ (Siedepunkt 56 °C) freigesetzt, welche aufgefangen werden müssen, da sie unter anderem (hoch)entzündlich und ätzend sind.

Die Synthese der InP-Quantenpunkte erfolgt üblicherweise in einem primären Amin als Lösemittel (beispielsweise Oleylamin), siehe beispielsweise Tessier, M.D. et al., Aminophosphines: A Double Role in Synthesis of Colloidal Indium Phosphide Quantum Dots, J. Am. Chem. Soc. 2016, 138, 5923-5929. Hierbei findet in der Regel eine Transaminierung mit dem primären Amin statt, welche jedoch im Falle von P(NMe₂)₃ neben der transaminierten Spezies zu unidentifizierten Nebenprodukten führt (sichtbar im ³¹P-NMR).

A. Buffard et al. offenbaren in "Mechanistic Insight and Optimization of InP Nanocrystals Synthesized with Aminophosphines" (Chem. Mater. 2016, 28, 16, 5925-5934) Untersuchungen zur Synthese von InP-Quantenpunkten aus InCl₃, Tris(dimethylamino)phosphin (P(NMe₂)₃), and Oleylamin.

Aus einem Vortrag von Rene Panzer mit dem Titel "Tri(pyrazolyl)phosphane - Synthese und Koordinationschemie mit ECl₃ (E = B, Al, Ga) sind bereits Synthese und Koordinationseigenschaften von Tripyrazolylphosphanen bekannt. Allerdings wurde in dem Vortrag nicht auf deren Reaktivität gegenüber Aminen eingegangen (12. Mitteldeutsches Anorganiker-Nachwuchssymposium, 1. September 2014 in Freiberg).

Aus einem Vortrag von Rene Panzer mit dem Titel *"Tri(pyrazolyl)phosphanes* - *Synthesis and Coordination Chemistry with Group 13 and 15 Elements* " sind bereits Synthese und Koordinationseigenschaften von Tripyrazolylphosphanen bekannt. Allerdings wurde in dem Vortrag nicht auf deren Reaktivität gegenüber Aminen eingegangen (ICPC 2014, 1. Juli 2014 in Dublin).

O.I. Kolodyazhnyi et al. offenbaren in "Diad Phosphorus-Nitrogen Prototropism of Tris(alkylamino)phosphines" Lösungen enthaltend tautomere Trisaminophosphane (Russian Journal of General Chemistry. Vol. 71. No. 4. 2001. 646-647).

N. Burford et al. offenbaren in "Sequential dehydrochloride coupling of trichlorophosphine with 2,6-di-isopropylaniline: aminophosphine precursors to phosphetidines" Lösungen enthaltend Trisaminophosphane (Can. J. Chem. 80: 1404-1409 (2002)).

Es werden also Pnictogenprecursoren benötigt, welche die oben genannten Nachteile nicht aufweisen und zusätzlich synthetisch leicht zugänglich sind.

Daher stellt die vorliegende Erfindung ein Verfahren zur Synthese von Aminopnictogenen eines primären Amins zur Verfügung, aufweisend die folgenden Schritte:
a) Bereitstellen einer oder mehrerer Verbindungen gemäß der folgenden Formel (I) 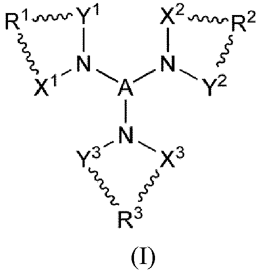 wobei
   A ausgewählt ist aus P, As, Sb und Bi; wobei 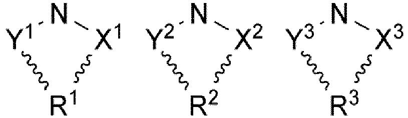 unabhängig voneinander ausgewählt sind aus 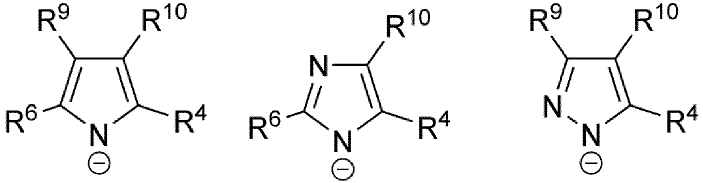 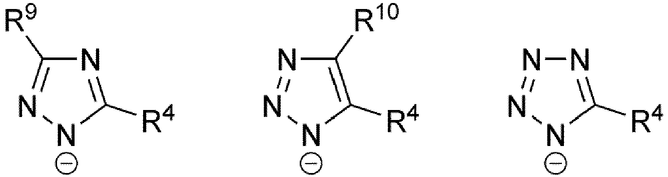 wobei
   - R⁴ und R⁶: unabhängig voneinander ausgewählt sind aus Wasserstoff und organischen Gruppen aufweisend bis zu sechs Kohlenstoffatome;
   - R⁹ und R¹⁰: unabhängig voneinander ausgewählt sind aus Wasserstoff und organischen Gruppen aufweisend bis zu zehn Kohlenstoffatome;
   und die Verbindungen gemäß der Formel (I) elektrisch neutral sind;
b) Umsetzen der Verbindungen gemäß der Formel (I) mit mindestens einem Äquivalent eines primären Amins gemäß der Formel H₂NR⁸, wobei R⁸ ein linearer oder verzweigter, gesättigter oder ungesättigter Kohlenwasserstoffrest ist, der 12 bis 24 Kohlenstoffatome aufweist.

Es wurde gefunden, dass die gemäß dem Verfahren der vorliegenden Erfindung erhaltenen Verbindungen keine Nebenprodukte aufweisen und die aus der Verbindung I freigesetzten cyclischen Amine leicht zurückgewonnen werden können. Zudem weisen die erhaltenen Lösungen eine hohe Lagerstabilität auf, wodurch sie sich als "stock solution" eignen. Des Weiteren läuft das Verfahren unter milderen Bedingungen ab, als eine analoge Synthese ausgehend beispielsweise von P(NMe₂)₃. Somit eignen sich diese Precursoren unter anderem für die Synthese von Quantenpunkten.

In der vorliegenden Erfindung bestehen Hydrocarbylgruppen aus Kohlenstoff und Wasserstoff.

In der vorliegenden Erfindung bezeichnet der Begriff "Amid" Verbindungen, die aus Aminen aufweisend mindestens eine N-H-Bindung durch Abspaltung eines Protons erhalten wurden.

In der vorliegenden Erfindung weist ein primäres Amin genau zwei Wasserstoffatome an einem Stickstoffatom auf.

In der vorliegenden Erfindung weist ein sekundäres Amin genau ein Wasserstoffatom an einem Stickstoffatom auf.

Der Ausdruck "organische Gruppen" schließt Gruppen ein, die nur aus Stickstoff bestehen. Beispielsweise besteht in Tetrazol, 1,3,4-Triazol oder deren Derivaten R¹, R² bzw. R³ aus 2 Stickstoffatomen.

Die organischen Gruppen gemäß der vorliegenden Erfindung können teilweise oder vollständig fluorierte Gruppen sein. Üblicherweise beträgt die Zahl an Atomen unterschiedlich von C, F und H in den organischen Gruppen nicht mehr als vier, vorzugsweise nicht mehr als drei und insbesondere bevorzugt nicht mehr als zwei. Insbesondere bevorzugt bestehen die Atome unterschiedlich von C, F und H in den organischen Gruppen, falls vorhanden, aus N, O oder S, insbesondere N.

In Schritt b) wird vorzugsweise mit mindestens drei Äquivalenten des primären Amins H₂NR⁸ umgesetzt. Mit anderen Worten ist es bevorzugt, dass eine vollständige Transaminierung durchgeführt wird. Die Formulierung "mindestens drei Äquivalenten" resultiert daraus, dass das zur Transaminierung verwendete Amin beispielsweise bei der Synthese von Quantenpunkten auch als Lösemittel eingesetzt wird, also im Überschuss vorhanden ist.

R⁸ ist vorzugsweise ein linearer oder verzweigter, gesättigter oder ungesättigter Kohlenwasserstoffrest, der 15 bis 21 Kohlenstoffatome aufweist und am stärksten bevorzugt ein linearer, gesättigter oder ungesättigter Kohlenwasserstoffrest, der 15 bis 21 Kohlenstoffatome aufweist.

Ein insbesondere geeignetes primäres Amin der Formel H₂NR⁸ ist Oleylamin.

R⁹ und R¹⁰ sind vorzugsweise unabhängig voneinander ausgewählt aus Wasserstoff und organischen Gruppen aufweisend bis zu sechs Kohlenstoffatome, beispielsweise Phenyl, lineares oder verzweigtes C₁- bis C₆-Alkyl, stärker bevorzugt unabhängig voneinander ausgewählt aus Wasserstoff und organischen Gruppen aufweisend bis zu drei Kohlenstoffatomen, beispielsweise lineares oder verzweigtes C₁- bis C₃-Alkyl, vorzugsweise sind die zuvor genannten organischen Gruppen Hydrocarbylgruppen, beispielsweise Phenyl, lineares oder verzweigtes C₁- bis C₆-Alkyl, stärker bevorzugt sind die zuvor genannten organischen Gruppen aliphatische Hydrocarbylgruppen, noch stärker bevorzugt sind die zuvor genannten organischen Gruppen lineare oder verzweigte Alkylgruppen, beispielsweise lineare oder verzweigte C₁- bis C₆-Alkylgruppen oder lineare oder verzweigte C₁-bis C₃-Alkylgruppen.

Vorzugsweise wird in Schritt a) eine Verbindung gemäß Formel (I) bereitgestellt in der
X¹ = X² = X³
Y¹ = Y² = Y³; und
R¹ = R² = R³
ist.

Vorzugsweise ist A = P oder As, insbesondere P.

Die Synthese der Verbindungen I erfolgte unter Modifikation der in S. Fischer, L. K. Peterson, J. F. Nixon, Can. J. Chem. 1974, 52, 3981-3985 und S. Fischer, J. Hoyano, L. K. Peterson, Canadian Chem. Journal 1976, 54, 2710-2714 beschriebenen Synthesen.

Schritt b) wird vorzugsweise bei einer Temperatur von nicht mehr als 150 °C, stärker bevorzugt bei einer Temperatur von 70 bis 120 °C, noch stärker bevorzugt bei einer Temperatur von 90 bis 110 °C durchgeführt.

Die Dauer von Schritt b) ist üblicherweise nicht mehr als 60 min, vorzugsweise nicht mehr als 30 min und stärker bevorzugt nicht mehr als 20 min.

Der Druck während Schritt b) beträgt vorzugsweise nicht mehr als 1 × 10⁻² mbar.

Schritt b) kann unter Verwendung des primären Amins H₂NR⁸ als Lösemittel, d.h. ohne zusätzliche Lösungsmittel, erfolgen oder in einem separaten Lösemittel, beispielsweise MeCN oder Pentan. Vorzugsweise erfolgt Schritt b) unter Verwendung des primären Amins H₂NR⁸ als Lösemittel ohne zusätzliche Lösungsmittel.

Falls in Schritt b) mit mindestens drei Äquivalenten des primären Amins H₂NR⁸ umgesetzt wird, so wird davon ausgegangen, dass die Reaktion über verbrückte Diphosphane abläuft. Ausgehend von einer Gesamtmenge an zwei Verbindungen der Formel (I) lautet der Reaktionsweg also wie folgt:

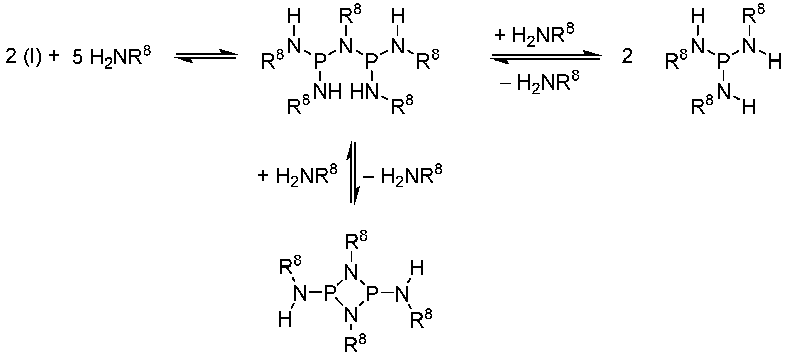

Das Verfahren gemäß der vorliegenden Erfindung weist vorzugsweise ferner den folgenden Schritt auf:
c) Rückgewinnung der Verbindungen

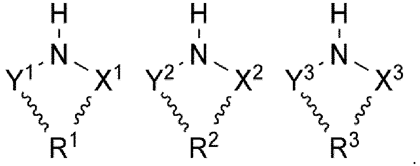

Die Rückgewinnung erfolgt üblicherweise durch Sublimation bzw. Destillation.

Es wurde gefunden, dass das Produkt aus dem Verfahren der vorliegenden Erfindung wenn A = P ist, im Gegensatz beispielsweise zu der Synthese ausgehend von P(NMe₂)₃, keine Nebenprodukte aufweist, welche im ³¹P-NMR ein Signal bei 50 ppm oder weniger haben (siehe Tessier, M.D. et al., Aminophosphines: A Double Role in Synthesis of Colloidal Indium Phosphide Quantum Dots, J. Am. Chem. Soc. 2016, 138, 5923-5929).

Folglich unterscheidet sich das Produkt aus dem Verfahren der vorliegenden Erfindung von den Produkten aus anderen Verfahren aus dem Stand der Technik.

Eine Lösung erhältlich aus dem Verfahren der vorliegenden Erfindung enthaltend P(HNR⁸)₃ zeigt im ³¹P-NMR-Spektrum ein Verhältnis des Signals von P(HNR⁸)₃ zu der Summe der Signale bei 50 ppm oder weniger von mindestens 75/25, oder von mindestens 90/10, oder von mindestens 95/5 oder von mindestens 98/2.

HNR⁸ in der obigen Formel P(HNR⁸)₃ ist das aus dem primären Amin H₂NR⁸ erhaltene Amid.

Das Produktspektrum weist typischerweise einen Verschiebungsbereich von *δ* = 80-140 ppm auf.

Die Methode zur Bestimmung der ³¹P-NMR-Spektren ist im experimentellen Teil beschrieben.

Eine Lösung erhältlich aus dem Verfahren der vorliegenden Erfindung enthaltend A(HNR⁸)₃, hat ein Verhältnis mol/mol zwischen der Verbindung A(HNR⁸)₃ und der Verbindung der Struktur 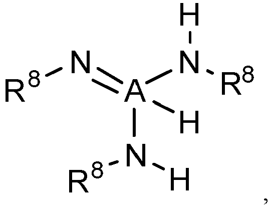 wobei
A P, As, Sb, Bi ist; und
R⁸ wie oben definiert ist;
von mindestens 75/25, oder von mindestens 90/10, oder von mindestens 95/5 oder von mindestens 98/2.

HNR⁸ in der obigen Formel A(HNR⁸)₃ ist das aus dem primären Amin H₂NR⁸ erhaltene Amid.

Eine Lösung erhältlich aus dem Verfahren der vorliegenden Erfindung enthaltend P(HNR⁸)₃ hat ein Verhältnis mol/mol zwischen der Verbindung P(HNR⁸)₃ und der Verbindung der Struktur 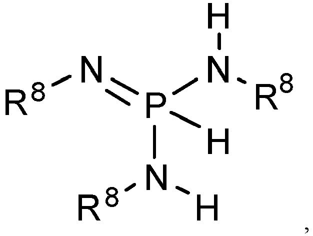 wobei
R⁸ wie oben definiert ist;
von mindestens 75/25, oder von mindestens 90/10, oder von mindestens 95/5, oder von mindestens 98/2.

HNR⁸ in der obigen Formel P(HNR⁸)₃ ist das aus dem primären Amin H₂NR⁸ erhaltene Amid.

Verfahren zur Herstellung von Quantenpunkten können unter Verwendung der Produkte des Verfahrens zur Synthese von Aminopnictogenen gemäß der vorliegenden Erfindung erfolgen. Verfahren zur Herstellung von Quantenpunkten sind aus dem Stand der Technik bekannt. Beispielsweise kann das Verfahren ein Heißinjektions- (hot injection) oder ein Heating-Up-Verfahren sein. Bei dem Heating-Up-Verfahren werden alle Precursoren bei Raumtemperatur vermengt und zusammen bei einer definierten Heizrate auf die Zieltemperatur gebracht. Ein derartiges Verfahren ist beispielsweise in Joong Pill Park et al., Highly luminescent InP/GaP/ZnS QDs emitting in the entire color range via a heating up process, Nature, Scientific Reports 6, Article number 30094, 2016 | DOI: 10.1038/srep30094 beschrieben.

In dem Verfahren zur Herstellung von Quantenpunkten kann das Produkt des Verfahrens zur Synthese von Aminopnictogenen auch als Reduktionsmittel eingesetzt werden. Eine derartige Reaktion ist beispielsweise in Grigel, V. et al., InAs Colloidal Quantum Dots Synthesis via Aminopnictogen Precursor Chemistry, J. Am. Chem. Soc. 2016, 138, 13485-13488 beschrieben.

### Experimenteller Teil

### Messmethoden

### ¹H-NMR, ¹³C-NMR, ³¹P-NMR

NMR Spektren wurden an einem Bruker AVANCE III HD Nanobay (¹H (400.13 MHz), ¹³C (100.61 MHz), ³¹P (161.98 MHz), oder 400 MHz UltraSield oder Bruker AVANCE III HDX, 500 MHz Ascend (¹H (500.13 MHz), ¹³C (125.75 MHz), ³¹P (202.45 MHz)) gemessen.

Zur Quantifizierung von Nebenprodukten, wie beispielsweise des A-H-Tautomers, in Verbindungen mit A = P, As, Sb und Bi wurden die o.g. Geräte eingesetzt und eine EXSY-Messung wie in S. Braun, H.-O. Kalinowski, S. Berger, 150 and More Basic NMR Experiments - A Practical Course, 2. Auflage., WILEY-VCH, 1998, ab Seite 420 beschrieben, durchgeführt.

### Absorptionsspektren

UV/vis Absorptionsspektren wurden mit einem Cary 50 Spectrophotometer (Varian) in 10×10 mm Quarzküvetten gemessen.

### Absolute Quantenausbeute

Quantenausbeuten wurden an einem FluoroLog-3 Spectrofluorometer (Horiba Jobin Yvon) ausgestattet mit einer Quanta-ϕ Ulbrichtkugel bestimmt. Die Quantenpunktlösungen wurden in 10×10 mm Quarzküvetten untersucht. Die Extinktion der Proben wurde vor der Messung zwischen 0.01 und 0.05 eingestellt.

### Synthesen

Folgende Verbindungen (Substituenten siehe Tabelle 1) wurden unter Modifizierung literaturbekannter Synthesewege, wie in a) S. Fischer, L. K. Peterson, J. F. Nixon, Can. J. Chem. 1974, 52, 3981-3985; b) S. Fischer, J. Hoyano, L. K. Peterson, Canadian Chem. Journal 1976, 54, 2710-2714 beschrieben, hergestellt. Das jeweilige Signal im ³¹P-NMR ist ebenfalls angegeben (siehe Tabelle 1).

### Beispiel 1

### Synthese der Verbindung (Me₂pyr)₃A (A = P, As):

Eine Mischung von 1-Trimethylsilyl-3,5-dimethylpyrazol (4.58 g, 27.22 mmol) und ACl₃ (A = P: 0.59 mL, 0.93 g, 6.81 mmol; A = As: 0.57 mL, 1.23 g, 6.81 mmol) wird ohne Lösungsmittel 12 h bei Raumtemperatur gerührt. Nach Entfernen aller flüchtigen Bestandteile im Vakuum werden die Verbindungen (Me₂pyr)₃A als farblose, langsam kristallisierende, analysenreine Feststoffe erhalten. Einkristalle zur Strukturanalyse lassen sich durch Sublimation gewinnen.

A = **P**: 2.13 g (quantitativ); Mp.: 73-77 °C; IR (KBr, 300 K, [cm⁻¹]): 3110(w), 2594(vw), 2922(m), 2861(vw), 1576(m), 1564(vw), 1461(w), 1442(w), 1411(m), 1291(vs), 1165(w), 1130(m), 1100(w), 1090(vw), 1024(w), 962(m), 818(m), 802(w), 790(w), 767(w), 760(w), 745(w), 593(w), 554(m), 512(m), 478(s), 444(w), 415(w); ¹H NMR (CDCl₃, 300 K, [ppm]): *δ* = 2.12 (9H, s, C5-H), 2.20 (9H, s, C4-H), 5.92 (3H, s, C2-H); ¹³C NMR (CDCl₃, 300 K, [ppm]): *δ* = 11.6 (3C, d, ³J_{PC} = 8.8 Hz, C5), 13.8 (3C, s, C4), 109.6 (3C, s, C2), 147,3 (3C, d, ²J_{PC} = 10.8 Hz, C3), 153.5 (3C, d, C1, ³J_{PC} = 10.3 Hz); ³¹P{¹H} NMR (CDCl₃, 300 K, [ppm]): *δ* = 71.9 (s); m/z (EI): 95(12), 96(30), 97(7), 125(7), 126(8), 127(18), 177(8), 179(10), 180(4), 192(6), 205(6), 220(100), 221(16), 222(22), 316(46), 317(8); Elementaranalyse: berechnet für C₁₅H₂₁PN₆: C: 57.0, H: 6.7, N: 26.6, gefunden: C: 56.9, H: 6.4, N:26.7.

A = **As:** 2.39 g (quantitativ); Mp.: 105-109 °C; IR (KBr, 300 K, [cm⁻¹]): 3202 (vw), 3131 (vw), 3110 (vw), 3038 (vw), 2976 (vw), 2959 (vw), 2931 (m), 1561 (vw), 1551 (m), 1439 (w), 1408 (m), 1319 (vw), 1295 (vs), 1246 (vw), 1152 (w), 1109 (m), 1018 (w), 964 (m), 801 (w), 786 (s), 754 (w), 738 (w), 587 (w), 470 (m), 461 (w); ¹H-NMR (CD₂Cl₂, 300 K, [ppm]): *δ* = 2.02 (9H, d, ⁴J_{HH} = 0.9 Hz, C5-H), 2.21 (9H, s, C4-H), 5.97 (3H, m, C2-H); ¹³C NMR (CD₂Cl₂, 300 K, [ppm]): *δ* = 11.3 (3C, s, C5), 13.8 (3C, s, C4), 108.9 (s, 3C, C2), 147.5 (3C, s, C3), 152.9 (3C, s, C1); m/z (EI): 42(4), 81(5), 91(4), 95(28), 96(64), 97(8), 169(6), 170(20), 171(4), 264(6), 266(100), 267(12), 289(7), 360(3), 396(25); Elementaranalyse: berechnet für C₁₅H₂₁PN₆: C: 50.0, H: 5.9, N: 23.3, gefunden: C: 49.5, H: 5.5, N: 22.9.

Analog zur Verbindung (Me₂pyr₃)P wurden folgende Verbindungen hergestellt. Die Ausbeute und die ³¹P-NMR-Verschiebung sind in folgender Tabelle 1 aufgeführt.

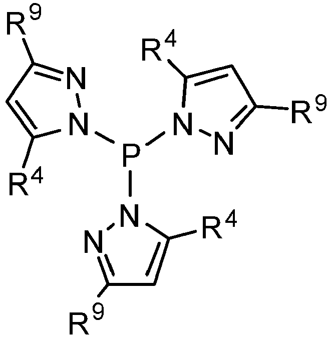

**Tabelle 1**

| Beispiel | R⁴ | R⁹ | Ausbeute [%] | ³¹P-NMR *δ* in [ppm] |
|---|---|---|---|---|
| 1 | H | H | 92 | 61.1 |
| 2 | Me | Me | 98 | 71.9 |
| 3 | *iso*-Pr | *iso*-Pr | 98 | 69.4 |
| 4 | Ph | Ph | 88 | 74.8 |
| 5 | H | CF₃ | 96 | 63.9 |
| 6 | Me | CF₃ | 95 | 76.4 |

0.5 mmol der jeweiligen Verbindung wurden anschließend in 1 mL Oleylamin suspendiert und bei 50 °C und einem Druck von unter 1 × 10⁻² mbar 12 h lang umgesetzt. In allen Fällen wurde P(OLA)₃ erhalten, welches ein Signal im ³¹P-NMR bei den o.g. chemischen Verschiebungen aufweist (*δ* = 80-140 ppm). Ein weiteres Signal trat bei höheren Frequenzen ("tieffeldverschoben") auf, welches dem korrespondierenden, aminoverbrückten Diphosphan zugeordnet werden konnte.

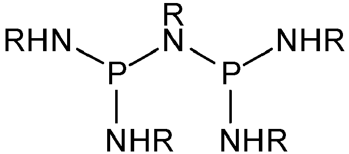

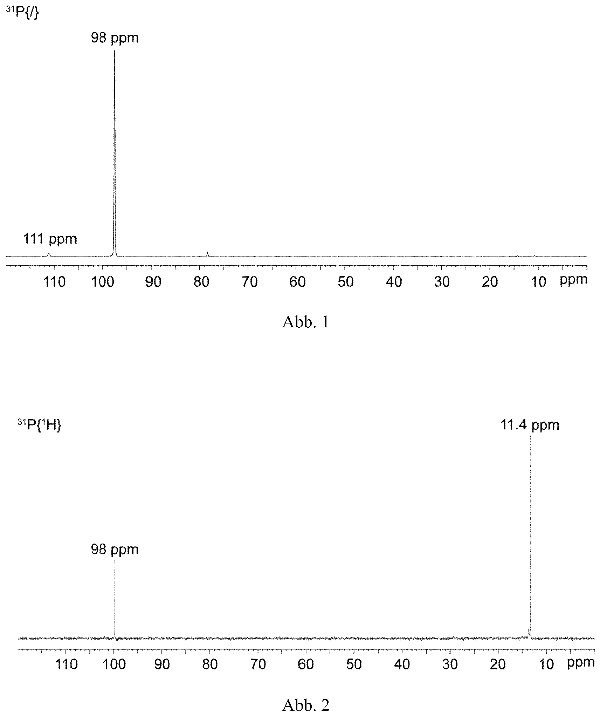

Im Falle von Verbindung 2 trat das Signal des aminoverbrückten Diphosphans bei 111 ppm auf und das Verhältnis betrug 97:3. Spuren des entsprechenden P-H-Tautomers der Formel 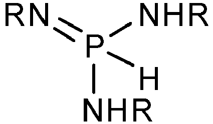 waren NMR-spektroskopisch nachweisbar, das Signalverhältnis P(OLA)₃ zu dem P-H-Tautomer betrug jedoch über 99:1. Abbildung 1 zeigt das entsprechende ³¹P-NMR Spektrum der synthetisierten P(OLA)₃ Lösung.

An Verbindung 2 wurde das abgespaltene 3,5-Dimethylpyrazol in Ausbeuten von über 90% zurück gewonnen.

Im Laufe von Monaten wird lediglich eine minimale Umlagerung zu dem P-H-Tautomer beobachtet, wobei das Verhältnis nach 3 Monaten lediglich bei 98:2 liegt.

### Vergleichsbeispiel 2

In einem Vergleichsversuch wurde 81.6 mg (0.5 mmol) P(NMe₂)₃ und 1 mL Oleylamin 12 h unter Normaldruck auf 50 °C erwärmt und anschließend auf Raumtemperatur abgekühlt. Nach Abkühlen wurde ein Vakuum (weniger als 1 × 10⁻² mbar) angelegt und weitere 60 Minuten bei 100 °C gerührt. Das entsprechende ³¹P-NMR-Spektrum ist in Abbildung 2 gezeigt.

Das ³¹P-NMR-Spektrum zeigte ein Signal bei 98 ppm und ein weiteres Signal bei 11.4 ppm in einem Verhältnis von 1:2. Das Signal bei 11.4 ppm wurde, wie oben ausgeführt, dem entsprechenden P-H-Tautomeren zugeordnet.

### Beispiel 3

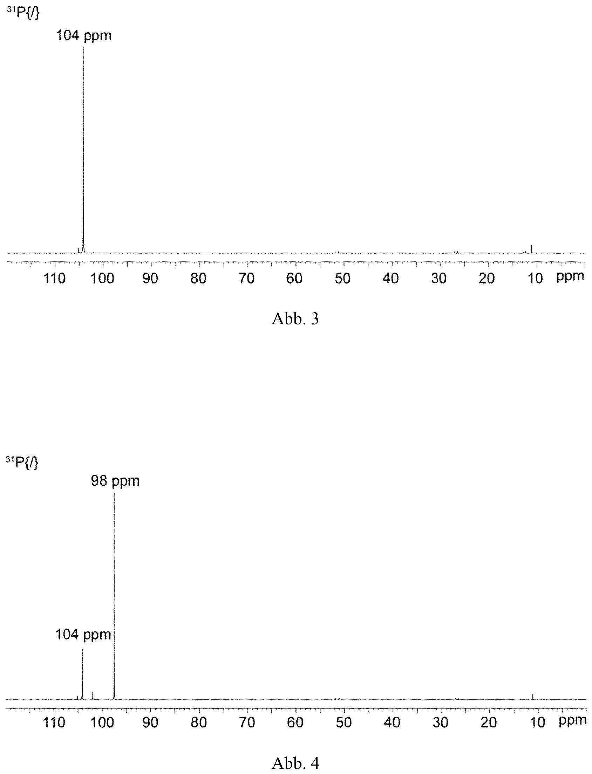

In einem weiteren Beispiel wurde Tris(pyrrolidenyl)phosphan (Y) nach Literaturvorschrift hergestellt [Boltukhina, E. V.; Sheshenev, A. E.; Lyapkalo, I. M. Tetrahedron, 2011, 67, 5382-5388.]. Die literaturbekannte Verbindung **Y** weist eine chemische Verschiebung im ³¹P-NMR-Spektrum von 104 ppm auf. Ein Test-NMR der Verbindung **Y** in Oleylamin zeigte ebenfalls die bekannte Resonanz bei 104 ppm (Abbildung 3).

1 mmol der Verbindung **Y** wurde in 2 mL Oleylamin gelöst und unter Vakuum auf 80 °C erhitzt. Nach 10 Minuten wurde ein Reaktions-NMR aufgezeichnet (Abbildung 4).

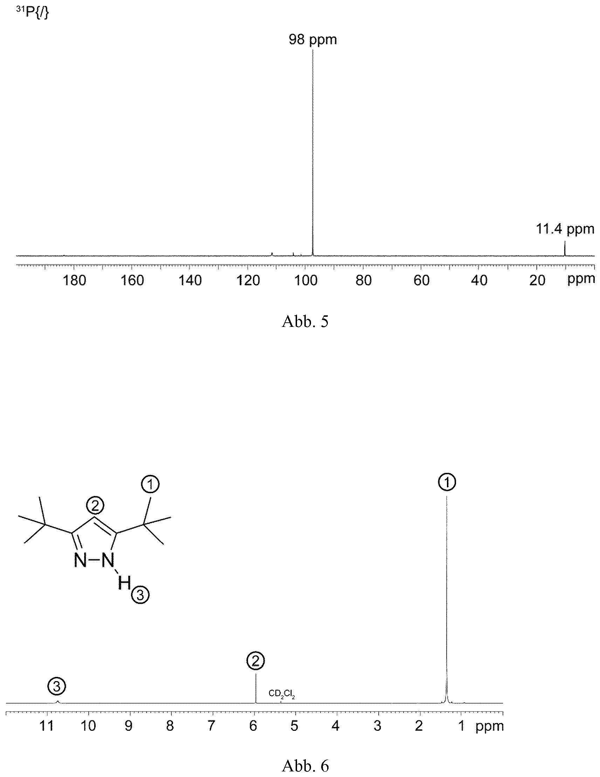

Die Transaminierung mit Oleylamin verläuft unter der erhöhten Temperatur, erkennbar an dem Signal bei 98 ppm. Nach weiteren 10 Minuten wurde erneut ein Reaktions-NMR aufgenommen, welches die sukzessive Umwandlung von **Y** zu P(OLA)₃ zeigt (Abbildung 5).

Folglich kann unter gleichen Bedingungen zu den Tris(pyrazolyl)phosphanen eine P(OLA)₃-Stammlösung ausgehend von Tris(pyrrolidinyl)phosphanen synthetisiert werden (Vakuum (weniger als 1×10⁻² mbar), 80 °C, 30 Minuten). Die Menge an P-H-Tautomer (³¹P-NMR bei 11.4 ppm) ist zwar geringfügig höher als bei den anderen Beispielen, aber noch deutlich geringer als bei der Synthese ausgehend von P(NMe₂)₃.

### Beispiel 4

### Synthese der Verbindung (tBu₂pyr)₃Sb

Kalium-3,5-di-*tert*-butylpyrazolat (655 mg, 3.0 mmol) und SbCl₃ (228 mg, 1.0 mmol) werden in THF 72 h bei Raumtemperatur gerührt. Nach Entfernen aller flüchtigen Bestandteile im Vakuum wird der Rückstand in Toluol aufgenommen, die Suspension filtriert und das Filtrat im Vakuum getrocknet. Das Produkt wird als farbloser Feststoff nach Umkristallisation in *n*-Pentane erhalten.

266 mg (40 %); Smp. 130-132 °C; ¹H-NMR (CD₂Cl₂, 300 K, [ppm]): *δ* = 1.19 (54H, s, C5-H), 6.09 (3H, s, C4-H); ¹³C NMR (CD₂Cl₂, 300 K, [ppm]): *δ* = 31.4 (18C, s, C5), 32.5 (6C, s, C4), 102.0 (3C, s, C2), 163.1 (6C, s, C3); IR (ATR, 300 K, [cm⁻¹]): 3228 (vw), 2953 (vs), 2926 (m), 2901 (m), 2866 (w), 1570 (vw), 1529 (vs), 1485 (w), 1460 (m), 1425 (m), 1409 (w), 1391 (w), 1360 (s), 1287 (s), 1250 (vs), 1222 (s), 1195 (s), 1129 (vw), 1114 (w), 1091 (s), 1059 (w), 1036 (w), 1020 (w), 1004 (w), 987 (vs), 933 (vw), 805 (w), 794 (vs), 765 (w), 718 (w), 698 (w), 678 (vw), 629 (w), 563 (vw), 533 (m), 517 (vw), 493 (vw), 462 (vs), 416 (vw); Raman (80 mW, 500 scans, 300 K, [cm⁻¹]): 3129 (27), 3013 (10), 2961 (96), 2924 (87), 2902 (100), 2874 (44), 2777 (8), 2709 (14), 1530 (18), 1486 (23), 1463 (41), 1446 (61), 1419 (40), 1391 (14), 1290 (15), 1251 (13), 1206 (47), 1060 (11), 1037 (15), 1028 (12), 1004 (9), 988 (16), 934 (30), 824 (72), 699 (9), 566 (49), 533 (22), 499 (12), 495 (12), 469 (16), 416 (10), 388 (15), 372 (30), 327 (13), 264 (41), 233 (41), 188 (35), 165 (30), Elementaranalyse: berechnet für C₃₃H₅₇PN₆Sb: C: 60.1, H: 8.7, N: 12.7, gefunden: C: 60.3, H: 8.5, N:12.4.

### Transaminierung von (tBu₂pyr)₃Sb mit Oleylamin

Zu einer Lösung aus (*t*Bu₂pyr)₃Sb (66 mg, 0.1 mmol) in *n*-Pentan wurde Oleylamin (80.3 mg, 98.8 µL, 0.3 mmol) gegeben. Die resultierende Suspension wurde filtriert und der Rückstand im Vakuum getrocknet. Der Rückstand wurde in CD₂Cl₂ aufgenommen. In Abbildung 6 ist das ¹H NMR Spektrum der isolierten Verbindung, welche als 3,5-di-*tert*-butylpyrazol identifiziert werden konnte, gezeigt. Von einer Transaminierung mit Oleylamin ist folglich auszugehen. Durch Abkühlen des Filtrats auf-29 °C für 16 Stunden konnte weiteres 3,5-di-*tert*-butylpyrazol aus der Reaktionslösung auskristallisiert und zudem durch Einkristallstrukturanalyse charakterisiert werden.

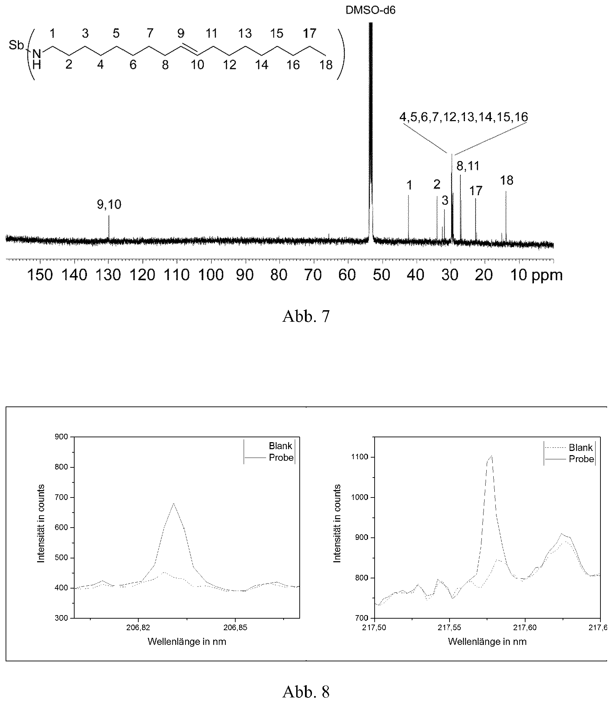

Anschließend wurde das Filtrat im Vakuum getrocknet und restliches 3,5-di-*tert-*butylpyrazol mit Acetonitril extrahiert. Das erhaltene Öl wurde getrocknet. In Abbildung 7 ist das ¹³C{¹H}-NMR-Spektrum des Öls in CD₂Cl₂ abgebildet. Es sind keine Signale mehr für das 3,5-di-*tert*-butylpyrazol (*δ*_{(13C)} = 31.3 ppm, 32.7 ppm, 96.2 ppm, 156.0 ppm) zu erkennen, wobei die übrigen Signale dem transaminierten Produkt Sb(OLA)₃ zuzuordnen sind.

Als weiteren Nachweis zeigen ICP-OES-Messungen der isolierten Verbindung die charakteristischen Emissionslinien von Antimon bei 206.83 nm und 217.57 nm (Abbildung 8). Im Falle von (*t*Bu₂pyr)₃Sb kann somit von einer analogen Transaminierung mit Oleylamin, im Vergleich zu den leichteren homologen P und As, ausgegangen werden.

### Herstellung von Quantenpunkten

55.3 mg (0.25 mmol) InCl₃ und 170.4 mg (1.25 mmol) ZnCl₂ wurden in 3 mL Oleylamin suspendiert und bei 100 °C für 15 Minuten bei einem Druck von 1 × 10⁻³ mbar entgast. Es wurde entweder eine vorgeheizte (180 °C) Lösung von *Tris*(3,5dimethyl)pyrazolphosphan (332.1 mg, 1.05 mmol) (**SR1**) oder 2 mL von der o.g Lösung von P(OLA)₃ ausgehend von Verbindung 2 (1 mmol) bei 200 °C (**SR2**) injiziert. Bei 180 °C wurden durch Variation der Wachstumszeit (15-60 Minuten) unterschiedlich große InP-Nanopartikel erhalten.

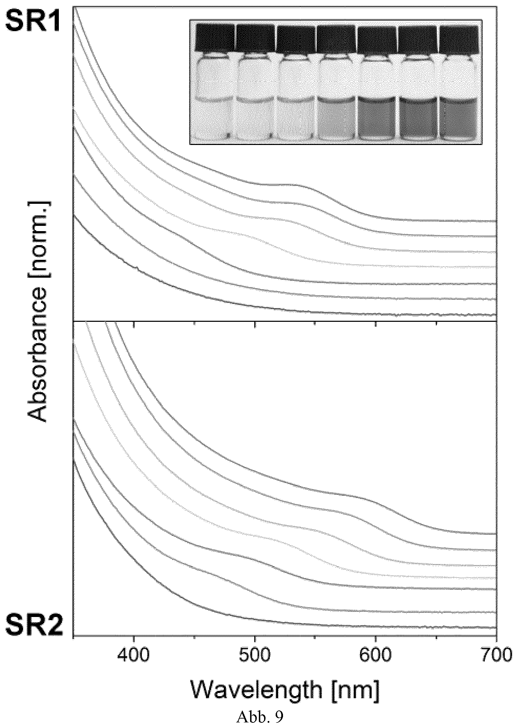

Abbildung 9 zeigt die temporale Entwicklung des Absorptionsmaximums der Quantenpunkte (Rotverschiebung). Die Kurven (gestapelt von unten nach oben) in beiden Graphen wurden nach 5 min, 7.5 min, 10 min, 15 min, 30 min, 60 min und 120 min aufgenommen.

NMR-spektroskopische Untersuchungen der Reaktionsgemische unter Verwendung von Syntheseprotokoll SR2 zeigen eine quantitative Umwandlung der Verbindung P(OLA)₃ zu dem Koppelprodukt [P(OLA)₄][Cl]. Letzteres resultiert aus der ablaufenden Redoxreaktion der Verbindung P(OLA)₃ mit InCl₃. 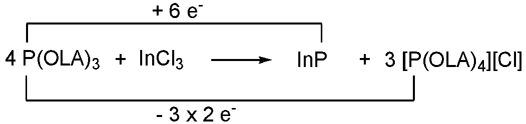 Reaktionsgleichung zur Bildung von InP mit eingezeichneten Redoxvorgängen.

Die Verbindung [P(OLA)₄][Cl] konnte durch die charakteristische chemische Verschiebung bei 29.3 ppm im ³¹P-NMR-Spektrum identifiziert werden. Es werden somit sehr saubere Reaktionsverläufe beobachtet. Vergleichbare Synthesen, ausgehend von P(NMe₂)₃, verlaufen NMR-spektroskopisch nicht derart zielgerichtet ab (siehe beispielsweise Tessier, M.D. et al., Aminophosphines: A Double Role in Synthesis of Colloidal Indium Phosphide Quantum Dots, J. Am. Chem. Soc. 2016, 138, 5923-5929.).

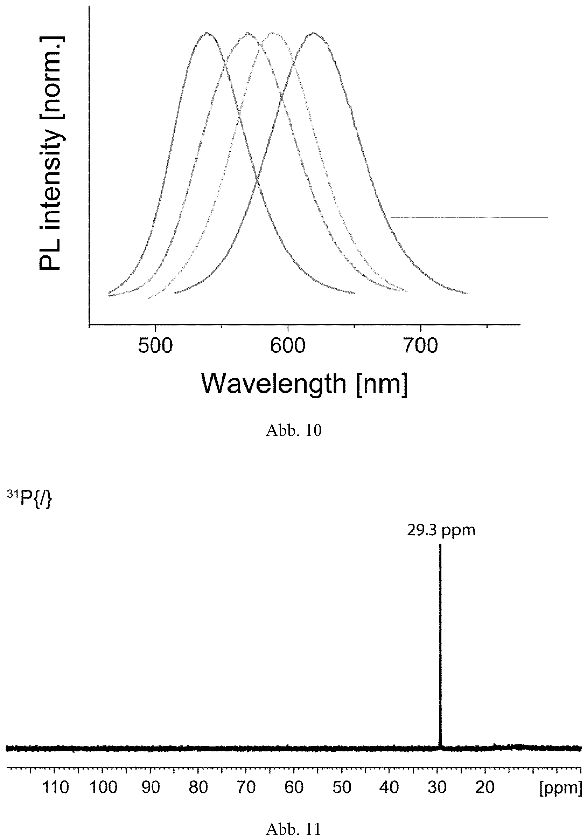

Abbildung 11 zeigt das ³¹P-NMR-Spektrum nach 15 Minuten, welches ein einzelnes Signal bei 29.3 ppm und kein Signal mehr bei 98 ppm (welches P(OLA)₃ entspräche) enthält. P(OLA)₃ hat folglich bereits nach 15 Minuten vollständig abreagiert.

Da derartige InP-Quantenpunkte nicht lumineszieren, wurde eine ZnS-Schale aufgetragen. Für die ZnS-Beschalung der InP-Kerne wurden bei 180 °C 5 mmol 1-Dodecanthiol (DDT) tropfenweise zugegeben. Nach 5 Minuten wurde die Temperatur auf 260 °C erhöht und für 4 (SR2) bis 5 (SR1) h gehalten. Die erhaltenen InP/ZnS Quantenpunkte wurden durch mehrmaliges Ausfällen und Redispergieren mittels Aceton und Toluol aufgereinigt. Die auf diese Weise aufgereinigten Nanopartikel wurden final in Toluol redispergiert und für die weitere Charakterisierung genutzt. Die erhaltenen spektroskopischen Daten der synthetisierten InP/ZnS Quantenpunkte sind in Tabelle 2 zusammengefasst.

**Tabelle 2: Zusammenfassung der spektroskopischen Eigenschaften der synthetisierten InP/ZnS Quantenpunkte.**

| Syntheseroute | **SR1** | | | | | **SR2** | | |
|---|---|---|---|---|---|---|---|---|
| Emissionsmaximum in nm | 530 | 555 | 595 | 620 | 538 | 570 | 587 | 619 |
| Abs. Quantenausbeute in % | 44 | 58 | 51 | 33 | 62 | 51 | 55 | 59 |
| FWHM in nm | 59 | 67 | 83 | 90 | 66 | 82 | 75 | 81 |

Wie aus Tabelle 2 und Abbildung 10 ersichtlich ist, lassen sich somit InP/ZnS Quantenpunkte mit Emissionsmaxima zwischen 500 und 620 nm bei einer FWHM von 60 bis 90 nm erhalten. Die Kurven zeigen (von links nach rechts) grüne, grüngelbe, gelbe und orangene Quantenpunkte (entsprechend SR2).

## Patentansprüche

1. Verfahren zur Synthese von Aminopnictogenen eines primären Amins aufweisend die folgenden Schritte:
a) Bereitstellen einer oder mehrerer Verbindungen gemäß der folgenden Formel (I) 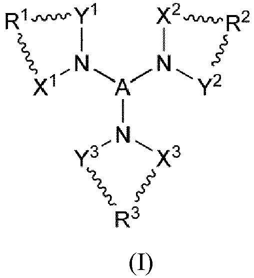 wobei
A ausgewählt ist aus P, As, Sb und Bi;
wobei 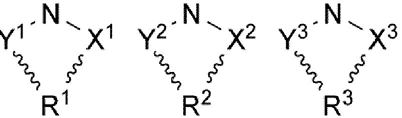 unabhängig voneinander ausgewählt sind aus 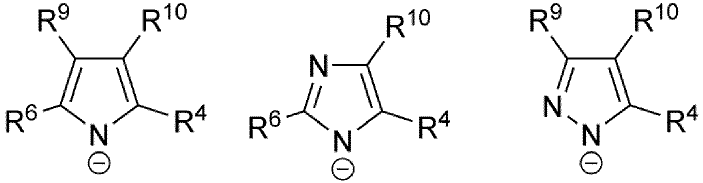 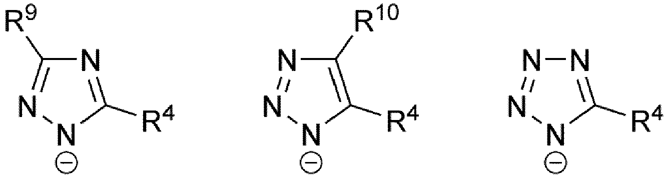 wobei
R⁴ und R⁶ unabhängig voneinander ausgewählt sind aus Wasserstoff und organischen Gruppen aufweisend bis zu sechs Kohlenstoffatome;
R⁹ und R¹⁰ unabhängig voneinander ausgewählt sind aus Wasserstoff und organischen Gruppen aufweisend bis zu zehn Kohlenstoffatome;
und die Verbindungen gemäß der Formel (I) elektrisch neutral sind;
b) Umsetzen der Verbindungen gemäß der Formel (I) mit mindestens einem Äquivalent eines primären Amins H₂NR⁸, wobei R⁸ ein linearer oder verzweigter, gesättigter oder ungesättigter Kohlenwasserstoffrest ist, der 12 bis 24 Kohlenstoffatome aufweist.

2. Das Verfahren gemäß Anspruch 1, wobei in Schritt b) mit mindestens drei Äquivalenten des primären Amins H₂NR⁸ umgesetzt wird.

3. Das Verfahren gemäß einem der vorangegangen Ansprüche, ferner aufweisend den folgenden Schritt
c) Rückgewinnung der Verbindungen

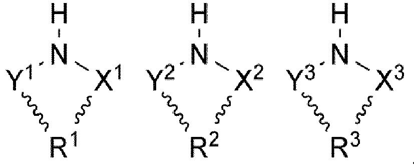

4. Das Verfahren gemäß einem der vorangegangen Ansprüche, wobei A = P ist.

## Claims

1. A process for the synthesis of aminopnictogens of a primary amine comprising the following steps:
a) Providing one or more compounds according to the following formula (I) 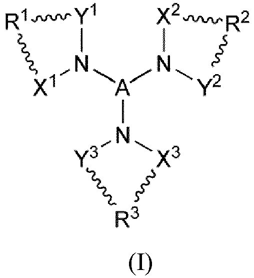 where
A is selected from P, As, Sb and Bi;
where 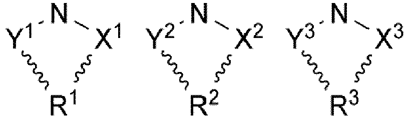 are independently selected from 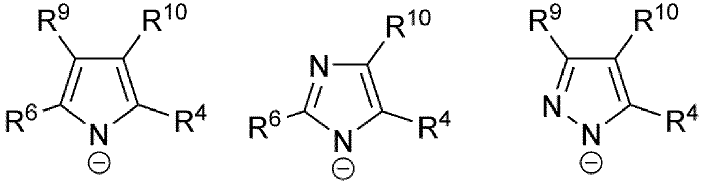 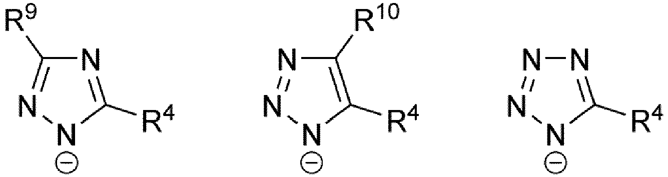 where
R⁴ and R⁶ are independently selected from hydrogen and organic groups having up to six carbon atoms;
R⁹ and R¹⁰ are independently selected from hydrogen and organic groups having up to ten carbon atoms;
and the compounds according to formula (I) are electrically neutral;
b) reacting the compounds of formula (I) with at least one equivalent of a primary amine H₂NR⁸, wherein R⁸ is a linear or branched, saturated or unsaturated hydrocarbon radical having from 12 to 24 carbon atoms.

2. The method of claim 1, wherein in step b) it is reacted with at least three equivalents of the primary amine H₂NR⁸.

3. The method according to any one of the preceding claims, further comprising the step of
c) recovery of the compounds

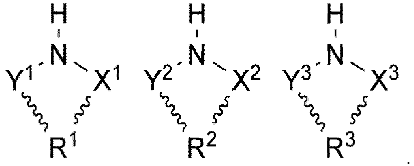

4. The method according to any one of the preceding claims, wherein A = P.

## Revendications

1. Procédé de synthèse d'aminopnictogènes d'une amine primaire, présentant les étapes suivantes :
a) la fourniture d'un ou de plusieurs composés selon la formule suivante (I) 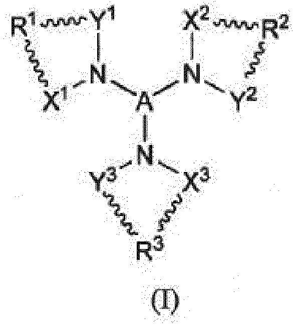 dans lequel
A est choisi parmi P, As, Sb et Bi ; dans lequel 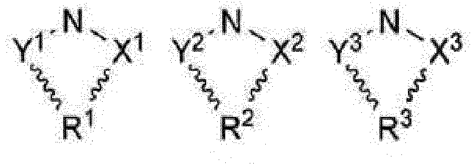 sont choisis indépendamment les uns des autres parmi 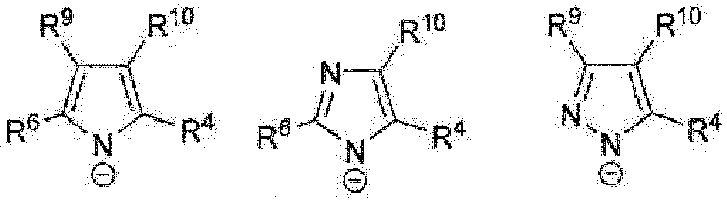 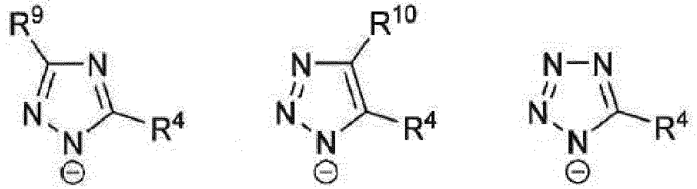 dans lequel
R⁴ et R⁶ sont choisis indépendamment l'un de l'autre parmi l'hydrogène et des groupes organiques présentant jusqu'à six atomes de carbone ;
R⁹ et R¹⁰ sont choisis indépendamment l'un de l'autre parmi l'hydrogène et des groupes organiques présentant jusqu'à dix atomes de carbone ;
et les composés selon la formule (I) sont électriquement neutres ;
b) la mise en réaction des composés selon la formule (I) avec au moins un équivalent d'une amine primaire H₂NR⁸, dans lequel R⁸ est un radical d'hydrocarbure linéaire ou ramifié, saturé ou insaturé, qui présente 12 à 24 atomes de carbone.

2. Procédé selon la revendication 1, dans lequel à l'étape b) la mise en réaction est réalisée avec au moins trois équivalents de l'amine primaire H₂NR⁸.

3. Procédé selon l'une des revendications précédentes, présentant en outre l'étape suivante c) de récupération des composés

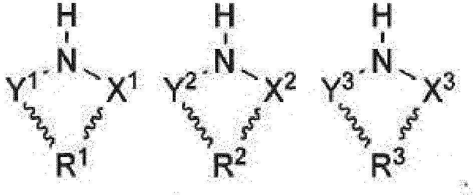

4. Procédé selon l'une des revendications précédentes, dans lequel A = P.
